# EUROPÄISCHE PATENTSCHRIFT

(11) **EP 0 709 945 B1**
(45) Veröffentlichungstag und Bekanntmachung des Hinweises auf die Patenterteilung: **12.05.1999**
(21) Anmeldenummer: 95810460.6
(22) Anmeldetag: 12.07.1995
(51) Int. Cl.: H02K 11/00

(54) **Elektromotor mit temperaturabhängigem Bauelement**
Electric motor with built-in temperature-dependant element
Moteur électrique avec dispositif dépendant de la température

(30) Priorität: 26.10.1994 DE 4438242
(43) Veröffentlichungstag der Anmeldung: 01.05.1996
(73) Patentinhaber: HILTI Aktiengesellschaft, 9494 Schaan (LI)
(72) Erfinder: Troeder, Lutz, D-82110 Germering (DE); Kristen, Ferdinand, D-82110 Germering (DE)
(74) Vertreter: Wildi, Roland

(56) Entgegenhaltungen:
- EP-A- 0 438 981
- US-A- 4 028 570

## Beschreibung

Die Erfindung betrifft einen Elektromotor mit ausgeprägte Pole aufweisendem Stator, Statorwicklungen und Isolationskörpern für die Isolierung der jeweiligen Stirnflächen des Stators, wobei die Isolationskörper im wesentlichen ringförmig ausgebildete, auf den Stirnflächen des Stators angeordnete Grundkörper aufweisen, von denen im Bereich der Pole Kragen axial abragen und wobei am Grundkörper Anschlussklemmen angeordnet sind.

Aus der DE-OS 30 37 615 ist ein Verfahren zur Festlegung von Statorwicklungen eines Elektromotors bekannt. Die Stirnflächen eines sich aus einem Blechpaket mit ausgeprägten Polen zusammensetzenden Stators sind mit jeweils einem Isolationskörper abgedeckt, von dessen Grundkörper jeweils zwei im wesentlichen diametral gegenüberliegende Kragen abragen. Beim Bewickeln des Stators dienen die Kragen der Festlegung der im Bereich der Stirnflächen entstehenden Wickelköpfe der Statorwicklungen, wobei die Statorwicklungen die durch die Kragen abgegrenzten Hohlräume durchsetzen. Der Isolationskörper besteht im wesentlichen aus einem ringförmig ausgebildeten Grundkörper, der neben zwei abragenden Kragen auch Anschlussklemmen aufweist. Während der Inbetriebnahme des Elektromotors erwärmt sich dieser. Werden dabei die zulässigen Temperaturen überschritten, so kann dies zu Beschädigungen der Wicklungsisolation führen.

Um die Beschädigungen der Wicklungsisolation verhindem zu können, wird bei einem Elektromotor, wie er aus der DE-OS 3 021 689 bekannt ist, ein temperaturabhängiges Bauelement in der Statorwicklung untergebracht, welches beim Ansprechen bei erhöhten Temperaturen eine Strombegrenzung bewirkt. Sofort nach Unterschreiten einer noch zulässigen Statorwicklungs-Temperatur wird vom temperaturabhängigen Bauelement die Strombegrenzung aufgehoben. Das Anordnen des temperaturabhängigen Bauelementes in der Statorwicklung während des Wickelvorganges ist sehr zeitaufwendig und daher nicht wirtschaftlich realisierbar.

Aus der EP-A438981 ist ein Elektromotor mit einem Stator, einem Rotor und zwei diametral gegenüberliegenden Wicklungspaketen die je einen Pol bilden bekannt. Die Wicklungspakete setzen sich aus je einer Statorwicklung und je einem der Aufnahme der Statorwicklung dienenden Isolationskörper aus einem nicht stromleitenden Material zusammen, durchsetzen den Stator und überragen beide Stirnseiten desselben. Wenigstens eines der beiden Isolationskörper weist eine taschenförmige Ausnehmung auf, in der ein temperaturabhängiges Bauelement Aufnahme findet. Das temperaturabhängige Bauelement ist seitlich neben einer Statorwicklung angeordnet und durch ein Wandungsteil der taschenförmigen Ausnehmung von der Statorwicklung getrennt.

Der Erfindung liegt die Aufgabe zugrunde, einen wirtschaftlich herstellbaren Elektromotor zu schaffen, bei dem Beschädigungen durch Temperaturüberschreitung vermieden werden.

Erfindungsgemäss wird die Aufgabe dadurch gelöst, dass im Bereich wenigstens eines Kragens an einem der Isolationskörper ein von der Statorwicklung überwickeltes, temperaturabhängiges Bauelement mit Elektrodrähten angeordnet ist, wobei die Elektrodrähte mit den Anschlussklemmen in Verbindung stehen.

Aufgrund der erfindungsgemässen Anordnung des temperaturabhängigen Bauelementes an wenigstens einem der Isolationskörper ist eine schnelle und wirtschaftliche Montage des temperaturabhängigen Bauelementes an dem Stator des Elektromotores gewährleistet. Das temperaturabhängige Bauelement wird nach dem Aufsetzen des Isolationskörpers auf den Stator mit der Statorwicklung überwickelt, so dass das temperaturabhängige Bauelement in einem direkten Kontakt mit der Statorwicklung steht, um von dieser erwärmt werden zu können. Ist der Draht der Statorwicklung von einer Isolationsschicht beispielsweise in Form eines Lackes umgeben, so steht das temperaturabhängige Bauelement in indirektem Kontakt mit der Statorwicklung. Eine sehr gute Temperatudibertragung zwischen dem temperaturabhängigen Bauelement und der Statorwicklung wird somit gewährleistet.

Das am Isolationskörper angeordnete, temperaturabhängige Bauelement besitzt zwei Elektrodrähte, über die entsprechende Ein- bzw. Abschaltsignale für die Strombegrenzung übertragen werden. Der Grundkörper des Isolationskörpers besitzt Anschlussklemmen, an denen vor der Montage des Isolationskörpers die Elektrodrähte des temperaturabhängigen Bauelementes befestigt werden. Das temperaturabhängige Bauelement und der Isolationskörper bilden somit eine Montageeinheit, die als Ganzes auf die Stirnfläche des Stators aufsteckbar ist.

Zweckmässigerweise ist das temperaturabhängige Bauelement in einer zum Kragen hin offenen Ausnehmung des Grundkörpers angeordnet. Diese Ausnehmung gewährleistet eine sichere, verrutschfreie Anordnung des temperaturabhängigen Bauelementes an dem Grundkörper des Isolationskörpers. Die Ausnehmung ist unter einem Kragen angeordnet.

Aus herstellungstechnischen Gründen ist vorzugsweise das temperaturabhängige Bauelement fest mit dem Grundkörper verbunden. Das temperaturabhängige Bauelement ist dabei am Grundkörper angeklebt, auf dem Grundkörper aufgesteckt oder mittels eines Befestigungselementes mit dem Grundkörper verbunden.

Damit ein direkter Kontakt der von dem temperaturabhängigen Bauelement zu den Anschlussklemmen führenden Elektrodrähte mit der Statorwicklung verhindert wird, sind vorzugsweise die für die Verbindung des temperaturabhängigen Bauelementes vorgesehenen Elektrodrähte in einem Aufnahmekanal des Grundkörpers angeordnet.

Vorzugsweise ist das temperaturabhängige Bauelement ein indirekt beheizter Kaltleiter. Der Widerstandswert eines Kaltleiters steigt bei zunehmender Temperatur nahezu sprungförmig an, sobald eine bestimmte Temperatur überschritten wird. Infolge eines sehr hohen positiven Temperaturkoefflzienten Werden die Kaltleiter auch als PTC-Widerstand bezeichnet.

Die Erfindung wird anhand von Zeichnungen, die ein Ausführungsbeispiel wiedergeben, näher erläutert. Es zeigen:
- Fig. 1: einen erfindungsgemässen Isolationskörper, in Verbindung mit einem Stator und einer Statorwicklung;

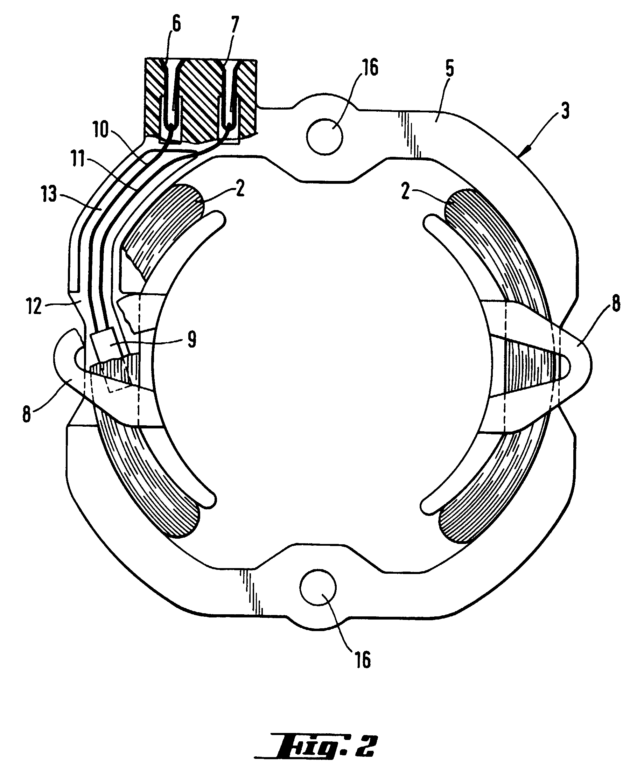

- Fig. 2: den Isolationskörper gemäss Fig. 1, in der Ansicht II, gemäss Fig. 1.

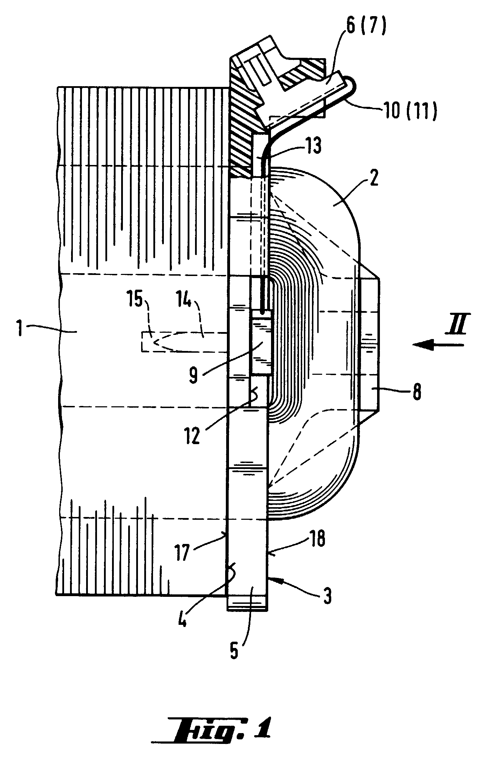

Der in Fig. 1 teilweise dargestellte Elektroreihenschlussmotor besitzt einen aus einem Blechpaket bestehenden Stator 1, auf dessen Stirnfläche 4 ein Isolationskörper 3 aufgesteckt ist. Die Verbindung zwischen dem Isolationskörper 3 und dem Stator 1 besteht aus stiftförmig ausgebildeten Verbindungselementen 14, die an einer ersten Seite 17 des Grundkörpers 5 angeordnet sind und in entsprechend ausgebildete Aufnahmebohrungen 15 des Stators 1 hineinragen.

Der Isolationskörper 3 setzt sich zusammen aus einem im wesentlichen ringförmig aus gebildeten Grundkörper 5, von dem an einer zweiten, dem Stator 1 abgewandten Seite 18 zwei einander diametral gegenüberliegende Kragen 8 abragen. An der Seite 18 ist eine Ausnehmung 12 angeordnet, die der Aufnahme eines temperaturabhängigen Bauelementes 9 dient Von der Ausnehmung 12 erstreckt sich ein offen ausgebildeter Aufnahmekanal 13 bis hin zu Anschlussklemmen 6, 7. Das temperaturabhängige Bauelement ist über Elektrodrähte 10, 11, die in dem Aufnahmekanal 13 geführt sind, mit den Anschlussklemmen 6, 7 verbunden. Die Ausnehmung 12 ist unter dem Kragen 8 in einem Bereich des Grundkörpers 5 angeordnet, der mit einer Statorwicklung 2 überwickelt wird. Die Tiefe des Aufnahmekanals 13 ist derart bemessen, dass die in dem Aufnahmekanal 13 angeordneten Elektrodrähte 10, 11 über die Oberfläche des Grundkörpers 5 im Bereich des Aufnahmekanales 13 nicht herausragen, so dass eine Berührung der Elektrodrähte 10, 11 mit der Statorwicklung 2 verhindert wird. Nicht dargestellte Wicklungsenden der Statorwicklungen 2 können beispielsweise an ebenfalls nicht dargestellten, weiteren am Grundkörper 5 angeordneten Anschlusselementen befestigt sein.

Der Grundkörper 5 besitzt Durchtrittsöffnungen 16, die sich einander diametral gegenüberliegen und gegenüber den Kragen 8 um 90° versetzt angeordnet sind.

## Patentansprüche

1. Elektromotor mit ausgeprägte Pole aufweisendem Stator (1), Statorwicklungen (2) und lsolationskörpern (3) für die Isolierung des jeweiligen Stirnflächen (4) des Stators (1), wobei die Isolationskörper (3) im wesentlichen ringförmig ausgebildete, auf den Stirnflächen (4) des Stators (1) angeordnete Grundkörper (5) aufweisen, von denen im Bereich der Pole Kragen (8) axial abragen und wobei am GrundkörperAnschlussklemmen (6, 7) angeordnet sind, **dadurch gekennzeichnet,** dass im Bereich wenigstens eines Kragens (8) an einem der Isolationskörper (3) ein von der Statorwicklung (2) überwickeltes, temperaturabhängiges Bauelement (9) mit Elektrodrähten (10, 11) angeordnet ist, wobei die Elektrodrähte (10, 11) mit den Anschlussklemmen (6, 7) in Verbindung stehen.

2. Motor nach Anspruch 1, dadurch gekennzeichnet, dass das temperaturabhängige Bauelement (9) in einer zum Kragen (8) hin offenen Ausnehmung (12) des Grundkörpers (5) angeordnet ist.

3. Motor nach Anspruch 1 oder 2, dadurch gekennzeichnet, dass das temperaturabhängige Bauelement (9) fest mit dem Grundkörper (5) verbunden ist.

4. Motor nach einem der Ansprüche 1 bis 3, dadurch gekennzeichnet, dass die für die Verbindung des temperaturabhängigen Bauelementes (9) mit den Anschlussklemmen (6, 7) vorgesehenen Elektrodrähte (10, 11) in einem Aufnahmekanal (13) des Grundkörpers (5) angeordnet sind.

5. Motor nach einem der Ansprüche 1 bis 4, dadurch gekennzeichnet, dass das temperaturabhängige Bauelement (9) ein indirekt beheizter Kaltleiter ist.

## Claims

1. Electric motor comprising a stator (1) with marked poles (1), stator windings (2) and insulation elements (3) for insulation of respective end surfaces (4) of the stator (1), and the insulation elements (3) comprise essentially ringshaped base elements (5), configured on the end surfaces (4) of the stator (1) and with collars (8) axially extending in the area of the poles, and terminal clamps (6, 7) are configured on the insulating element, **characterised in that** in the area of at least one collar (8) on one of the insulation elements (3) is arranged a temperature dependent unit (9), which is wound over by the stator winding (2), with electric wires (10, 11), and the electric wires (10, 11) are connected to the terminal clamps (6, 7).

2. Motor according to Claim 1, **characterised in that** the temperature dependent unit (9) is configured in a cutout (12) of the base element (5) which is open towards the collar (8).

3. Motor according to Claim 1 or 2, **characterised in that** the temperature dependent unit (9) is firmly connected to the base element (5).

4. Motor according to one of Claims 1 to 3, **characterised in that** the electric wires (10, 11) provided for connecting the temperature dependent unit (9) to the terminal clamps (6, 7) are placed in an accommodation channel (13) of the base element (5).

5. Motor according to one of Claims 1 to 4, **characterised in that** the temperature dependent unit (9) is an indirectly heated cold conductor.

## Revendications

1. Moteur électrique comprenant un stator (1) à pôles saillants, des enroulements de stator (2) et des corps isolants (3) pour isoler les faces frontales correspondantes (4) du stator (1), les corps isolants (3) comportant des corps de base de forme sensiblement annulaire (5) qui sont disposés sur les faces frontales (4) du stator (1) et desquels des pattes (8) dépassent axialement dans la zone des pôles, et des bornes de connexion (6, 7) étant disposées sur le corps de base, caractérisé en ce que, dans la zone d'au moins une patte (8), un composant (9) sensible à la température, enjambé par l'enroulement de stator (2) et pourvu de fils électriques (10, 11), est disposé sur l'un des corps isolants (3), les fils électriques (10, 11) étant reliés aux bornes de connexion (6, 7).

2. Moteur selon la revendication 1, caractérisé en ce que le composant (9) sensible à la température est disposé dans un évidement (12), ouvert vers la patte (8), du corps de base (5).

3. Moteur selon la revendication 1 ou 2, caractérisé en ce que le composant (9) sensible à la température est solidarisé au corps de base (5).

4. Moteur selon l'une des revendications 1 à 3, caractérisé en ce que les fils électriques (10, 11) servant à relier le composant (9) sensible à la température aux bornes de connexion (6, 7) sont disposés dans un canal récepteur (13) du corps de base (5).

5. Moteur selon l'une des revendications 1 à 4, caractérisé en ce que le composant (9) sensible à la température est un conducteur à coefficient de température positif chauffé indirectement
